# EUROPEAN PATENT APPLICATION

(11) **EP 2 418 122 A1**
(43) Date of publication of application: **15.02.2012**
(21) Application number: 11176960.0
(22) Date of filing: 09.08.2011
(51) Int. Cl.: B60Q 1/44, B60Q 1/30

(54) **SECURITY SYSTEM FOR INDICATING THE DECELERATION OF A VEHICLE**

(30) Priority: 10.08.2010 ES 201031239
(71) Applicant: Pi I Parera, Pere, 08756 La Palma de Cervello (ES)
(72) Inventor: Pi I Parera, Pere, 08756 La Palma de Cervello (ES)
(74) Representative: Ponti Sales, Adelaida

(57) **Abstract**

The security system for indicating the deceleration of a vehicle comprises a first light indicator (1) that indicated that the brake pedal of the vehicle is pressed, and it is characterised in that it also comprises a second light indicator (2) that indicates that the accelerator pedal has been released.

Said first light indicator (1) that indicates that the brake pedal is pressed is divided into a plurality of sections (1a), so that the sections (1a) are lightened according to the pressure applied to the brake pedal.

It permits to indicate any of the situations in which the vehicle can decelerate, releasing the accelerator or pressing the brake.

## Description

The present invention refers to a security system for indicating the deceleration of a vehicle, that permits the drivers behind the vehicle to know if it accelerates or decelerates, and with which intensity.

### BACKGROUND OF THE INVENTION

It is known that governments and car manufacturers try to enhance the road safety limiting the number of road accidents.

The vehicles include break lights that warn the driver of the vehicle behind when the driver presses the brake pedal.

To enhance this indicator system of that the brake has been activated, an horizontal signal was incorporated on the upper part of the rear of the rear window of the vehicle, so that it also lightens when the brake pedal is pressed.

These indicator systems currently known are valid to indicate the drivers that the brake pedal has been pressed, but they do not indicate neither if the vehicle decelerates not pressing the brake pedal nor the brake intensity.

From document ES 2 144 457 T3 is known a security system with a visual indicator for cars that indicates the movement state of the car to the driver of the vehicle behind it. This system comprises a light arrangement placed on the rear part of the car, that lighten when the mean measured speed of the car is lower than a reference value. Furthermore, this system also comprises means for measuring the distance between the car provided with the security system with the visual indicator and the car behind it.

The system disclosed in this document is complex, because of the presence of the distance meter with the vehicle behind it. Furthermore, it presents the drawback that it does not indicate any kind of deceleration, but it only indicates that the value of the mean speed is lower than a reference value.

Therefore, it is apparent the need for a system that indicates a deceleration in the vehicle being simple and easy to be installed, with a reduced cost, increasing the road security.

### DESCRIPTION OF THE INVENTION

With the security indicator system of the invention said drawbacks can be solved, presenting other advantages that will be described.

The security system for indicating the deceleration of a vehicle of the present invention comprises a first light indicator that indicates that the brake pedal of the vehicle is pressed, and it is characterised in that it also comprises a second light indicator that indicates that the accelerator pedal has been released.

Therefore, it is indicated any of the situations in which the vehicle can decelerate, releasing the accelerator pedal or pressing the brake pedal. Hence, the drive of the vehicle behind the vehicle provided with the security indicator system of the present invention will immediately know that the vehicle in from of him/her is decelerating, and not only when the vehicle brakes, as currently.

According to a preferred embodiment, said first light indicator that indicates that the brake pedal is pressed is divided into a plurality of sections, so that the sections are lightened according to the pressure applied to the brake pedal.

Therefore, the driver of the vehicle behind the vehicle with the security indicator system of the present invention will always know the brake intensity immediately, so that if the vehicle stops due to a sudden brake action, all the sections will be lightened immediately.

To make its vision easier, said second light indicator is placed in an upper portion of the vehicle.

Preferably, said first light indicator is double and symmetric, and it can be horizontal, vertical or inclined.

Advantageously, said first and second light indicators are formed by light emitting diodes.

### BRIEF DESCRIPTION OF THE DRAWINGS

For a better understanding of what has been described some drawings are attached in which, diagrammatically and only as a non-limitative example, a practical embodiment is shown.
Fig. 1 is a diagrammatical view of the rear part of a car provided with the security indicator system of the present invention, with no deceleration;
Fig. 2 is a diagrammatical view similar to Fig. 1, when the driver releases the accelerator pedal, lighting the second light indicator;
Fig. 3 is a diagrammatical view similar to Fig. 1, when the drive releases the accelerator pedal, lightning the second light indicator, and when the driver has pressed the brake pedal; and
Fig. 4 is a diagrammatical view similar to Fig. 1, when the driver has released the accelerator pedal, lighting the second light indicator, and when the driver has pressed completely the brake pedal.

### DESCRIPTION OF A PREFERRED EMBODIMENT

As shown in the drawings, the security indicator system of the present invention indicates the deceleration of a vehicle by any of the reasons that can make the vehicle to decelerate done by the driver: when the driver releases the accelerator pedal or when the driver presses the brake pedal, with the suitable intensity according to the available braking path.

To this end, the security indicator system of the present invention comprises a first light indicator 1, that is lightened when the brake pedal is pressed, and a second light indicator 2, that is lightened when the accelerator pedal as been released.

Differently from the brake indicators of the conventional vehicles, the first light indicator 1 comprises or is divided in a plurality of sections 1a, indicating the brake intensity, so that when greater is the number of lighten section greater is the brake intensity.

Said first light indicator 1 is double and symmetrical, as shown in the figures.

On the other hand, the second light indicator 2 is placed on the upper o high part of the vehicle, and it would only be lightened when the driver releases the accelerator pedal for any reason.

According to a preferred embodiment, both light indicators 1 and 2 comprise a plurality of light emitting diodes (LEDs), even though it could include any suitable light emitter.

Therefore, the driver of the vehicle behind the vehicle provided with the security indicator system of the present invention can know if the vehicle in front of him/her decelerates for any reason, and successively the vehicles behind, so that they can decelerate or brake to prevent a possible accident.

Furthermore, thanks to the sections of the first light indicator 1, he/she can know immediately the brake intensity of the vehicle in front of him/her, to act accordingly.

In the drawing four situations of the security indicator system of the present invention have been shown.

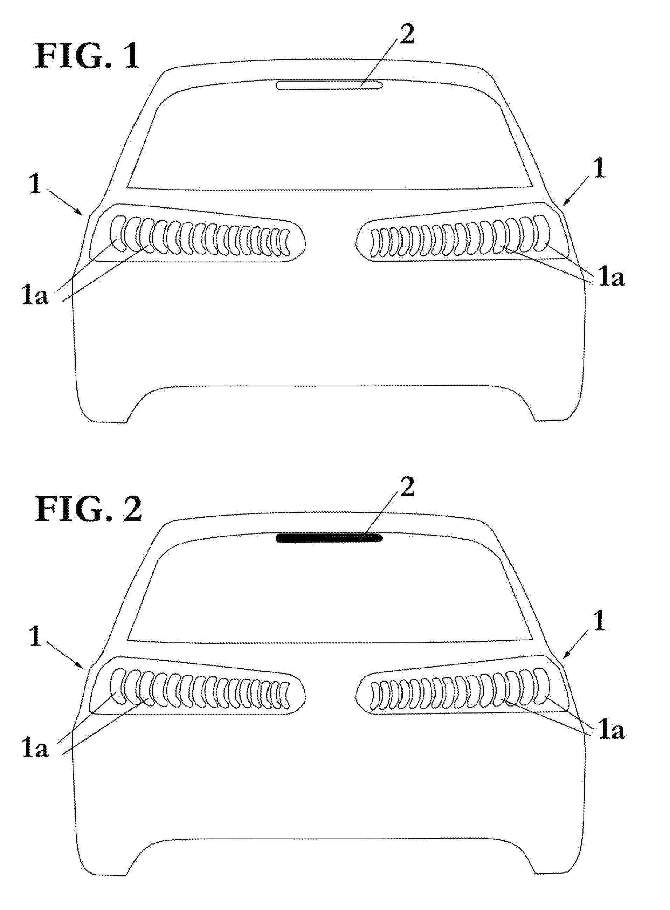

Particularly, in Fig. 1 the first light indicator 1 and the second light indicator 2 are off, indicating that the driver of the vehicle is pressing the accelerator pedal and that the vehicle is at a constant speed or is accelerating.

In Fig. 2, the second light indicator 2 is lightened, so that the driver has released the accelerator pedal and the vehicle is decelerating slowly.

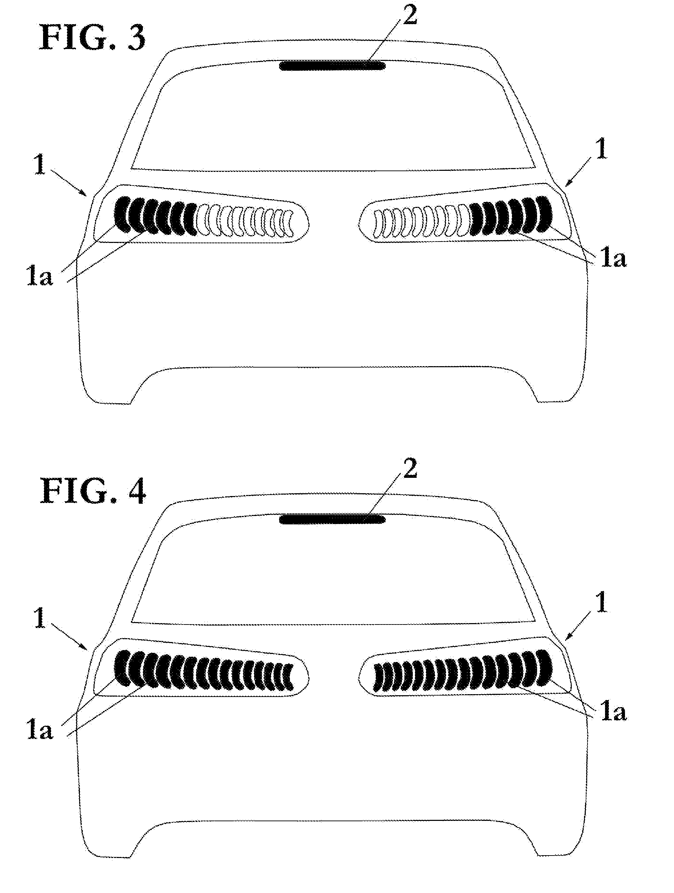

In Fig. 3, the second light indicator 2 is lightened, because the driver does not press the accelerator pedal, and the first light indicator 1 is also lightened. When the driver begins pressing the brake pedal, e.g. three sectors 1a will be lightened, and the driver continues pressing the brake pedal, progressively more sectors 1a will be lightened, e.g. one at each time. Therefore, the lightened sectors 1a indicate that the driver has pressed the brake pedal with a medium intensity.

Finally, in Fig. 4 the second light indicator 2 is lightened, because the driver does not press the accelerator pedal, and the first light indicator 1 is also completely lightened, because the driver has pressed completely, with the higher intensity, the brake pedal of the vehicle, indicating a sudden braking action.

It must be pointed out that the first indicator 1 will remain lightened until the vehicle moves again, i.e. it will indicate the vehicles behind that the vehicle is stopped.

Even though reference is made to a specific embodiment of the invention, it is apparent for a person skilled in the art that the disclosed security indicator system is susceptible of numerous variations and modifications, and that all the details mentioned can be substituted any other technically equivalent ones, without departing from the scope of protection defined by the attached claims.

## Claims

1. Security system for indicating the deceleration of a vehicle, said vehicle comprising a brake pedal and an accelerator pedal, the system comprising a first light indicator (1) that indicates that the brake pedal of the vehicle is pressed, **characterised in that** it also comprises a second light indicator (2) that indicates that the accelerator pedal has been released.

2. Security system according to claim 1, wherein said first light indicator (1) that indicates that the brake pedal is pressed is divided in a plurality of sections (1a), so that the sections (1a) are lightened according to the pressure applied to the brake pedal.

3. Security system according to claim 1, wherein said second light indicator (2) is placed in an elevated part of the vehicle.

4. Security system according to claim 1 or 2, wherein said first light indicator (1) is double and symmetrical.

5. Security system according to any of the previous claims, wherein said first (1) and second (2) light indicators are formed by light emitter diodes.
